# EUROPEAN PATENT APPLICATION

(11) **EP 4 764 173 A1**
(43) Date of publication of application: **24.06.2026**
(21) Application number: 25226389.2
(22) Date of filing: 22.12.2025
(51) Int. Cl.: F01L 3/08, F01M 9/10, F16N 7/36, F16J 15/3252

(54) **HYDROGEN COMBUSTION ENGINE VALVE SEALING**

(30) Priority: 20.12.2024 NL 2039436
(71) Applicant: DAF Trucks N.V., 5643 TW Eindhoven (NL)
(72) Inventor: VAN DEN HEUVEL, Ignace Theodorus Maria, 5643 TW Eindhoven (NL)
(74) Representative: V.O.

(57) **Abstract**

A hydrogen combustion engine comprises a combustion chamber comprises with cylinder head having at least one valve, said at least one valve comprising a valve disc for closing the combustion chamber from a manifold area and a valve stem coupled to an actuator system provided on the cylinder head and guided through a valve guide of the cylinder head and through the manifold area towards a valve seat to actuate the valve disc. The valve guide comprises a first seal assembly facing the manifold area; and is dimensioned for allowing the valve stem to reciprocate while preventing lubricant entering the manifold area through said seal assembly. The valve guide is further fluidly connected to an oil return gallery via an oil outlet channel near the seal assembly.

## Description

### FIELD OF INVENTION

The invention relates to a hydrogen combustion engine. As an alternative for a CO2 free powertrain a lean burn spark ignited H2-ICE (internal combustion engine) combines zero CO2 free capability with good efficiency. To maximize efficiency power turbocharging the hydrogen combustion engine is a preferred option.

### DESCRIPTION OF THE PRIOR ART

For a hydrogen combustion engine, hydrogen combustion is typically ignited by spark ignition. Conventionally, hydrogen is injected in a cylinder via direct injection or via port injection. Either way, air intake is controlled via an inlet valve. Similarly, exhaust gas is exhausted via an outlet valve. The inlet valve resides on a cylinder head, together with outlet valves, usually in pairs.

The valves are provided with a valve disk that substantially seals the cylinder by a valve seat provided in the cylinder head. The valve disk is formed with a central valve stem for actuation of the valve. The valve stem runs through a spring arrangement arranged on the cylinder head and is actuated by a valve actuator system, for example driven by a tappet actuator connected to a camshaft or other hydraulic actuator. The spring arrangement biases the valve disk in closed position. For smooth operation and reduction of wear, moving parts, including valve actuator system and reciprocating valve stem and spring arrangement are lubricated. In particular the stem is arranged in a valve guide that provides a linear actuation path for the valve stem to reciprocate in accordance with the valve actuator movements.

Such a conventional valve guide arrangements including a lubrication path for lubricating the valve guide are known e.g. from DE19808051 included by reference.

Such valve guide arrangements may be part of or mounted on the cylinder head and may include parts of gas exchange channel herein called a manifold area.

The cylinder head may have a cylindrical or conical outer shape for a secure fit and may include features like cooling channels or valve guides for enhanced thermal management or lubrication and/or extensions for mounting valve actuation components.

Typically the valve guide for guiding the valve stem is provided in a wall of a manifold area in the cylinder head connecting with the inlet manifold or outlet manifold respectively, so that the valve stem runs through the manifold area. Many seal designs have been proposed that provide a lubrication path along the stems while preventing that lubricant exceeds the area of the valve guide. However, further optimization of a seal design appears to be desired.

### SUMMARY OF THE INVENTION

It is an object to provide a hydrogen combustion engine with a valve stem lubrication that is further optimized for hydrogen combustion engines.

To this end a hydrogen engine is proposed according to the features of claim 1. In particular a hydrogen combustion engine according to the invention comprises a hydrogen fuel supply, an air supply, a fuel ignition device, a combustion chamber for converting the ignited hydrogen fuel to work, and an exhaust for exhausting exhaust gases from the combustion chamber. The combustion chamber comprises a cylinder head with at least one valve, said at least one valve comprising a valve disc for closing the combustion chamber from a manifold area and a valve stem coupled to an actuator system provided on the cylinder head and guided through a valve guide of the cylinder head and through the manifold area towards a valve seat to actuate the valve disc. The valve guide comprises a first seal assembly facing the manifold area; and is dimensioned for allowing the valve stem to reciprocate while preventing lubricant entering the manifold area through said seal assembly. The valve guide is further fluidly connected to an oil return gallery via an oil outlet channel near the seal assembly.

By this structure a lubrication flow path is provided that allows for continuous replacement of lubricant in the valve guide, yet at the same time fully preventing lubricant entering the manifold area. It was found that hydrogen ignition may occasionally become unstable through other ignition causes. This may result in unstable ignition which of course is undesired. By the inventive design, a reduced risk of pre-ignition or combustion instability can be realized by preventing any lubricant entering, which is especially problematic at high engine loads, where substantial pressures and gas flows occur in the manifold area.

The first seal assembly is dimensioned to withstand substantial pressures that may occur in the manifold area, that may be suction pressures or high gas pressures by turbocompressing the gas inlet or by having considerable exhaust pressures. To arrange for such pressure conditions, the first seal assembly may comprise a rod seal and a wiper seal. The rod seal substantially hermetically seals the valve stem to the valve guide but allows for minute lubrication itself. It is positioned between the reciprocating stem and the valve guide wall to prevent the escape of lubricant. It can be made from elastomeric materials, it ensures the system retains operating pressure, enabling the actuator to function effectively. In addition to sealing, rod seals maintain a controlled thin film of fluid on the rod's surface during its movement. This fluid film is crucial for lubricating the rod and adjacent components, reducing wear, and protecting against corrosion. The seal's design balances efficient fluid retention with low friction, promoting durability under the dynamic stresses of reciprocation. The wiper seal complements the rod seal by preventing external contaminants, like dirt and moisture, from reaching it as the rod moves, thus protecting the rod seal from damage and leakage. Positioned at the cylinder opening, the wiper seal also retains the rod's lubrication film during retraction, reducing friction and corrosion. Together, the wiper seal clears contaminants while the rod seal retains pressurized fluid, promoting sealing integrity and reliable cylinder performance. The rod seal and wiper seal may be integrated in a single seal body. The lubricant flow path may be designed to benefit from gravity, i.e. the valve guide may connect to a lubricant collection feature provided on the cylinder head near the valve guide that provides supply of lubricant into the valve guide. In addition the return gallery also preferably is provided at a position lower than the outlet channel, which in turn preferably allows a continuous descent of lubricant from the valve guide.

A further seal may be provided sealing a top part of the valve guide while allowing a single direction of lubricant flow towards the first seal assembly. The further seal preferably comprises a sealing lip that is designed as a lubricant metering device. The further seal may be reinforced by a reinforcement bus that is attached to an upper valve guide opening.

### BRIEF DESCRIPTION OF THE DRAWINGS

The invention will be further elucidated in the figures:
Figure 1 shows an embodiment of an internal combustion engine arranged for reducing the emission of unburnt fuel;
Figure 2 shows a prior art set up of a valve arrangement in a cylinder head;
Figure 3A and 3B show variants of this seal, which is further detailed in Figure 3C;
Figure 4A shows a schematic enhancement of the valve configuration shown in Figure 2B;
Figure 4B schematically shows a lubricant flow path;
Figures 5A-C show in further detail variants of seal assembly.

### DETAILED DESCRIPTION

Unless otherwise defined, all terms (including technical and scientific terms) used herein have the same meaning as commonly understood by one of ordinary skill in the art to which this disclosure belongs as read in the context of the description and drawings. It will be further understood that terms, such as those defined in commonly used dictionaries, should be interpreted as having a meaning that is consistent with their meaning in the context of the relevant art and will not be interpreted in an idealized or overly formal sense unless expressly so defined herein. In some instances, detailed descriptions of well-known devices and methods may be omitted so as not to obscure the description of the present systems and methods. Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be further understood that the terms "comprises" and/or "comprising" specify the presence of stated features but do not preclude the presence or addition of one or more other features.

While example embodiments are shown for systems and methods, also alternative ways may be envisaged by those skilled in the art having the benefit of the present disclosure for achieving a similar function and result. E.g. some components may be combined or split up into one or more alternative components. Finally, these embodiments are intended to be merely illustrative of the present system and should not be construed as limiting the appended claims to any particular embodiment or group of embodiments. Thus, while the present system has been described in particular detail with reference to specific exemplary embodiments thereof, it should also be appreciated that numerous modifications and alternative embodiments may be devised by those having ordinary skill in the art without departing from the scope of the present systems as set forth in the claims that follow. The specification and drawings are accordingly to be regarded in an illustrative manner and are not intended to limit the scope of the appended claims.

A controller, in particular, an engine controller arranged to vary the ignition timing of an ignition device can be provided by circuitry or programming, by lookup tables or a combination thereof, by means known to the skilled person. Similarly, air and fuel supply can be controlled by controlling air inlet supply devices, controlling boost pressure by turbocompressor settings and additional air flow or fuel flow controllers or a combination thereof.

Any reference signs in the claims do not limit their scope; several "means" may be represented by the same or different item(s) or implemented structure or function; any of the disclosed devices or portions thereof may be combined together or separated into further portions unless specifically stated otherwise. The mere fact that certain measures are recited in mutually different claims does not indicate that a combination of these measures cannot be used to advantage.

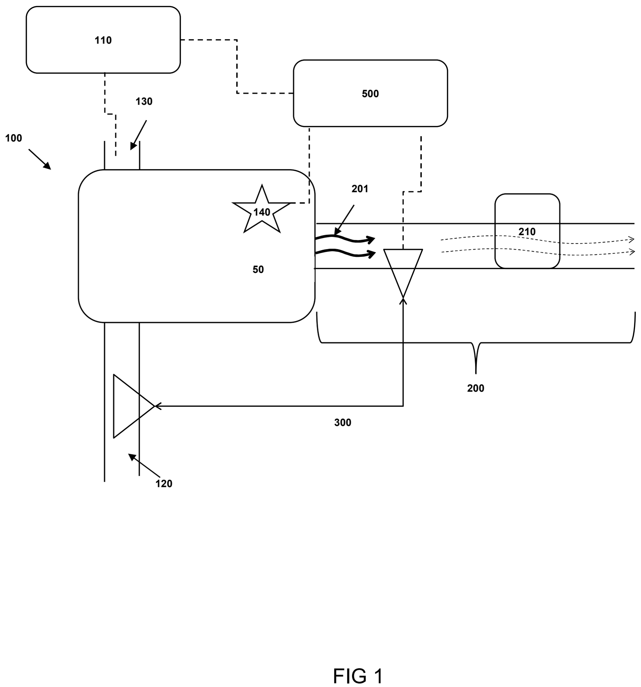

Turning now to Figure 1, there is illustrated an embodiment of an hydrogen internal combustion engine 100 with a combustion chamber 50. Advantageously, hydrogen and air are premixed before ignition of the mixture, to provide combustion. Ignition can be realized in any particular way, e.g. through a spark plug, a laser or prechamber, or compression ignition mechanism 140. The hydrogen engine may be of a type were the hydrogen is injected in the intake manifold, (PFI) as well as engines were the hydrogen is directly injected (DI) in the cylinder to mix with air before ignition, typically right after intake valve closing.

The internal combustion engine 100 comprises an air intake 120, a fuel supply 130, and a fuel supply system 110. The fuel supply system 110 is arranged for supplying an amount of hydrogen to the internal combustion engine. The air intake 120 is controlled by a turbo compressor 300.

The internal combustion engine 100 further comprises an exhaust 200 for transporting the exhaust gas 201 from the internal combustion engine 100 through an engine after treatment system 210 (EAS), including selective catalytic reactor for removing NOx from the exhaust gases, to the environment.

The internal combustion engine 100 further comprises an engine management system 500 arranged to control the ignition timing, air supply 120 and fuel supply (quantity and timing), aimed at regulating the torque, while keeping the boost pressure after expansion substantially on par with the boost pressure at the full load values. This can be achieved through a combination of ignition timing, air and fuel supply.

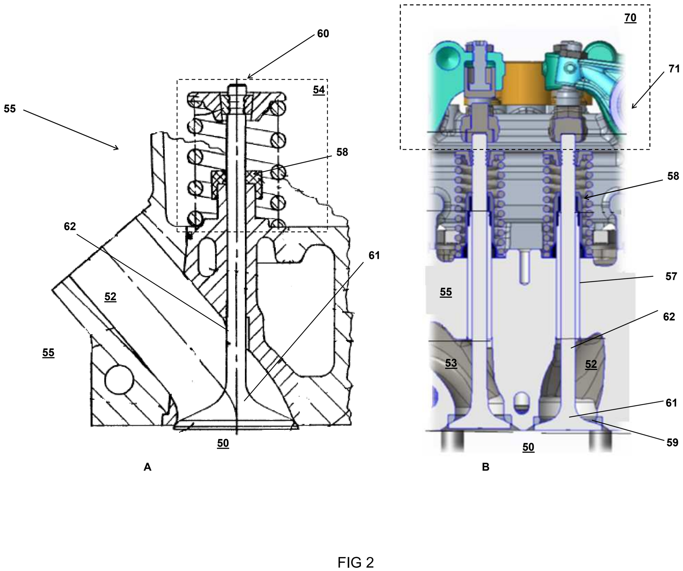

Figure 2A and 2B show conventional valve arrangements in a cylinder head 55 for the combustion chamber 50 in Figure 1. In Figure 2A a single valve is illustrated which may preferably be closing an air inlet 52; in Figure 2B a double valve is illustrated which may be both an air intake 52 or and exhaust channel 53. Valve 60 comprises a valve disc 61 for closing the combustion chamber from a manifold area 52, 53 and valve stem 62 which is coupled to an actuator system 70. Stem 62 is guided through a valve guide 57 of the cylinder head 55 and through the manifold area 52, 53 towards a valve seat 59 to actuate the valve disc 61 from closed to open position against a bias force provided by a spring arrangement 54. This arrangement 54 is actuated by a valve actuator system 70, for example driven by a tappet actuator 71 connected to a camshaft or other hydraulic actuator (not shown). The spring arrangement 54 biases the valve disk 61 in closed position against a valve seat 59 forming part of cylinder head 55.

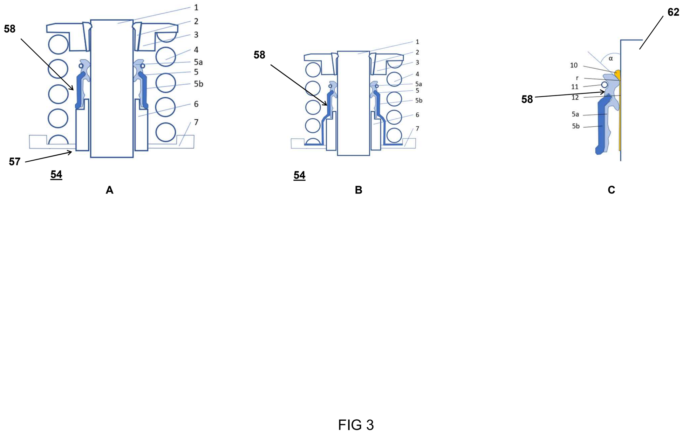

In more detail Figures 3A-C show preferred embodiment of top seal 58 cross sectional view of top seal 58. In the preferred embodiment the valve guide 57 comprises a top seal 58 sealing a top part of the valve guide 57 while allowing a single direction of lubricant flow into the valve guide 57. Effectively seal 58 is a single direction seal (also called a positive seal), allowing a minute flow of lubricant into the valve guide and blocking a reverse flow.

Figure 3A and 3B show variants of this seal, which is further detailed in Figure 3C.

In Figure 3A a seal 58 is reinforced with a bushing -5b pressing seal lip -5a against valve stem -1. Positive valve stem seal 58 is mounted on top of a valve guide opening -6 which may be provided on top of the valve guide 57 seals a volume around the valve stem-1 and guide opening -6. The seal 58 is stationary and may be clamped onto the valve guide opening -6. Alternatively in Figure 3B, a variant is shown with an reinforcement bushing -5b which may be extended towards a seat -7 at the bottom of spring system -4. When high pressures within the seal occur due to for instance engine braking, the seal 58 can kept in position by spring system - 4. To this end spring system -4 is coupled via a locker -2 to the valve stem 1. This variant may be preferential when the engine is equipped with an decompression engine brake setup resulting in high cylinder pressures.

The metering principle of positive seal 58 follows from Figure 3C wherein an oil puddle -10 is formed above sealing lip -5a. Typical lubricant metering rate may be in the range 0.1 - 1.0 mg per valve per hour resulting in an oil foil -12. Major factors determining the rate of lubricant flow are the radius of the sealing lip (r) and the lip angle to the oil film side(α) which may be in the area of 50 -70 degrees. Clamping spring -11 ensures contact of the lip with the valve stem wall. The radial force of the spring -11 is not a major factor in determining the oil rate, however it is important for assuring lip contact. The movement of the stem -1 will force a film portion of oil puddle -10 to pass the seal by hydrodynamic force. The net oil flow is a balance between the design of the elements of the lip angle, the radius and the pressure, the pressures and so on.

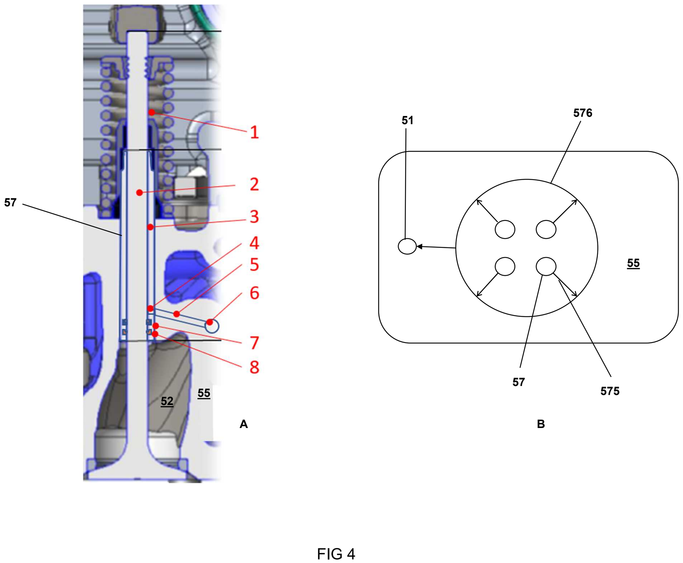

In further development of the present invention, Figure 4A shows a schematic enhancement of the valve configuration shown in Figure 2B. In particular, at -1 lubricant is provided to valve stem -2, which may be provided by metering principle disclosed in the previous Figure 3C or via alternative means e.g. by injection. Lubricant enters valve guide -3 and is further transported to below, preferably by gravity or an overpressure. Valve guide -3, which is conventionally provided as a bore through manifold part 52, e.g. by drilling or casting is fluidly connected to a lubricant outlet channel 5 that transports lubricant to an oil return gallery -6 provided in the cylinder head 55, e.g. a separate collecting channel that collects lubricant from several valves away from the valve guide -2. The outlet channel -5 may be connected via a through hole -4 to the valve guide -3. The lubricant flow path may be designed to benefit from gravity, i.e. the valve guide may connect to an lubricant collection feature provided on the cylinder head, e.g. provided in the cylinder head 55 near the valve guide 57 that provides supply of lubricant into the valve guide by forming a puddle as demonstrated in Figure 3C. Valve guide 57 comprises a seal assembly -7,8 facing the manifold area 52. The seal assembly is dimensioned for allowing the valve stem -2 to reciprocate while preventing lubricant entering the manifold area 52 through said seal assembly -7, -8 which can be a rod seal -7 and a wiper seal -8.

Figure 4B schematically shows a lubricant flow path that may be designed to benefit from gravity, i.e. the valve guide 57 is connected to a return gallery 576 that is also preferably is provided at a position lower than the outlet channel 575, which in turn preferably allows a continuous descent of lubricant from the valve guide 57. Although this is a preferred embodiment, the lubricant flow direction may be controlled (even reversed) e.g. by providing a pressure difference between oil return gallery 576 and lubricant inlet. Figure 4B further schematically shows a drain channel 51, e.g. via a riser pipe that traverses the cylinder block to collect lubricant from oil return gallery 576 fluidly connected to individual valve guides 57.

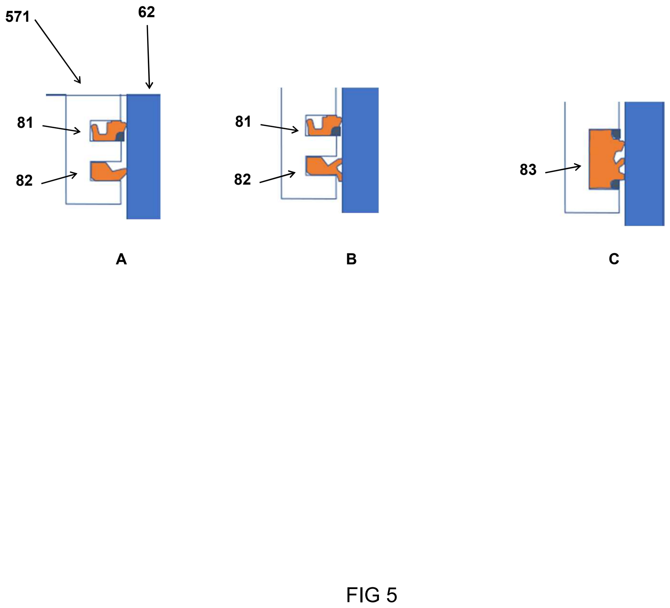

Figures 5A-C show in further detail variants of seal assembly -7, -8 of Figure 4A. In particular Figure 5A shows a variant of a rod seal 81 and a wiper seal 82 provided in the interior of valve guide 57 near an end facing the manifold area as shown in Figure 4.
The rod seal 81 substantially hermetically seals the valve stem 62 to the interior of the valve guide 57 but allows for minute lubrication of the rod seal 81 itself. It positioned between the reciprocating stem 62 and the valve guide wall 571 to prevent the escape of lubricant. It can be made from elastomeric materials, it ensures the system retains operating pressure, enabling the actuator to function effectively. In addition to sealing, rod seals maintain a controlled thin film of fluid on the rod's surface during its movement. This fluid film is crucial for lubricating the rod and adjacent components, reducing wear, and protecting against corrosion. The seal's design balances efficient fluid retention with low friction, promoing durability under the dynamic stresses of reciprocation. The wiper seal 82 complements the rod seal 81 by preventing external contaminants, like dirt and moisture, from reaching it as the rod moves, thus protecting the rod seal 81 from damage and leakage. The wiper seal may comprise a single wiping lip (Figure 5A) or a double (Figure 5B). Positioned at the opening facing the manifold area, the wiper seal 82 also retains the rod's lubrication film during retraction, reducing friction and corrosion. Together, the wiper seal clears contaminants while the rod seal retains pressurized fluid, promoting sealing integrity and reliable cylinder performance. The rod seal and wiper seal may be integrated in a single seal body 83.

## Claims

1. A hydrogen combustion engine comprising a hydrogen fuel supply, an air supply, a fuel ignition device, a combustion chamber for converting the ignited hydrogen fuel to work, and an exhaust for exhausting exhaust gases from the combustion chamber, wherein the combustion chamber comprises a cylinder head comprising at least one valve, said at least one valve comprising a valve disc for closing the combustion chamber from a manifold area and a valve stem coupled to an actuator system provided on the cylinder head and guided through a valve guide of the cylinder head and through the manifold area towards a valve seat to actuate the valve disc, said valve guide comprising a first seal assembly facing the manifold area; and dimensioned for allowing the valve stem to reciprocate while preventing lubricant entering the manifold area through said seal assembly; wherein said valve guide is further fluidly connected to an oil return gallery via an oil outlet channel near the seal assembly.

2. A hydrogen combustion engine according to claim 1, wherein first seal assembly comprises a rod seal and a wiper seal.

3. A hydrogen combustion engine, wherein the rod seal and wiper seal are integrated in a single seal body.

4. A hydrogen combustion engine according to any preceding claim, wherein the valve guide comprises a further seal sealing a top part of the valve guide while allowing a single direction of lubricant flow towards the first seal assembly.

5. A hydrogen combustion engine according to the preceding claim, wherein the further seal comprising a sealing lip that is designed as a lubricant metering device.

6. A hydrogen combustion engine according to the preceding claim, wherein the sealing lip is shaped with upstanding sides in a direction away from the valve stem, so that an oil puddle is formed in the recess formed by upstanding sides of the sealing lip.

7. A hydrogen combustion engine according to the preceding claims 4 and 5, wherein the further seal is reinforced by a reinforcement bus that is attached to an upper valve guide opening.

8. A hydrogen combustion engine according to any preceding claim, wherein the valve guide is provided by a bore through a cylinder head, said bore comprising a drain hole that connects the oil outlet channel to the bore.

9. A hydrogen combustion engine according to any preceding claim, wherein an oil return gallery comprises a drain channel that drains the outlet channel.

10. A hydrogen combustion engine according to any preceding claim, wherein the oil return channel fluidly combines multiple outlet channels for more than one valve in a cylinder head.
